# EUROPEAN PATENT APPLICATION

(11) **EP 4 832 230 A1**
(43) Date of publication of application: **28.10.2026**
(21) Application number: 26162766.5
(22) Date of filing: 06.03.2026
(51) Int. Cl.: H01M 50/516, H01M 50/503, H01M 50/517

(54) **CONNECTION BAR FOR BATTERY PACK, BATTERY PACK AND ELECTRICAL DEVICE**

(30) Priority: 23.04.2025 CN 202520784207 U; 13.06.2025 WO PCT/CN2025/100901
(71) Applicant: Eve Energy Storage Co., Ltd, Wuhan, Hubei 430074 (CN)
(72) Inventor: YOU, Shaobo, Wuhan, 430074 (CN); YU, Ming, Wuhan, 430074 (CN); CAO, Fengfeng, Wuhan, 430074 (CN); GONG, Muhong, Wuhan, 430074 (CN)
(74) Representative: Zhu, Puxing

(57) **Abstract**

A connection bar for a battery pack, including: a first connecting portion, configured to be electrically connected to an output electrode of a battery cell; a bending portion, having two ends along a first direction, one of which is connected to the first connecting portion; and a second connecting portion, bent and connected to the other one of the two ends of the bending portion, so that the second connecting portion and the first connecting portion are offset in the first direction, and the second connecting portion having at least one waist-shaped hole each configured to allow a fastener to pass through so as to install and fix the second connecting portion; the first direction is a thickness direction of the first connecting portion.

## Description

### TECHNICAL FIELD

The present application relates to the technical field of batteries, and in particular to a connection bar for battery pack, a battery pack and an electrical device.

### BACKGROUND

A battery pack includes a battery module and an output terminal. The battery module is configured to store electric energy, and the output terminal is configured to output electric energy.

In the related art, a battery pack is also provided with a connection bar and screws. One end of the connection bar is connected to the output electrode of the battery module, and the other end is connected to the output terminal through a screw installed from top to bottom. In order to avoid the screw from protruding upward too high, the connection bar is configured so that one end that fits with the screw is recessed downward, so that the overall height after the screw is installed can be lower. However, during the operation of the battery pack, the battery module is easily expanded by heat and pulls or squeezes the connection bar, resulting in damage to the recessed portion of the connection bar.

### SUMMARY

In a first aspect, an embodiment of the present application provides a connection bar for a battery pack, including:
a first connecting portion configured to be electrically connected to an output electrode of a battery cell;
a bending portion, having two ends along a first direction, one of the two ends is connected to the first connecting portion, the first direction being a thickness direction of the first connecting portion; and
a second connecting portion, bent and connected to another one of the two ends of the bending portion, wherein the second connecting portion and the first connecting portion are offset in the first direction, the second connecting portion provided with at least one waist-shaped hole each configured to allow a fastener to pass through so as to install and fix the second connecting portion.

Optionally, an end of the second connecting portion along a second direction is connected to the bending portion, the second direction intersects with the first direction, and the at least one waist-shaped hole each extends along the second direction.

Optionally, the first connecting portion and the second connecting portion are located on different sides of the bending portion along the second direction.

Optionally, the first connecting portion includes a first surface and a second surface arranged opposite to each other along the first direction, the first surface facing the battery cell, and the bending portion is connected to the first surface;
wherein the second connecting portion includes a third surface, an orientation of the third surface being the same as that of the second surface, the third surface and the bending portion form a lower space at a periphery of the first connecting portion, and the lower space is configured to allow the fastener to pass through the waist-shaped hole from the lower space.

Optionally, the first connecting portion and the second connecting portion are located on different sides of the bending portion along a second direction intersecting with the first direction;
wherein the first connecting portion includes a second surface that is away from the battery cell along the first direction, and the second connecting portion includes a third surface, an orientation of the third surface being the same as that of the second surface, and a distance between the third surface and the second surface in the first direction is greater than or equal to 7 mm and less than or equal to 10 mm; and/or
wherein in the second direction, the bending portion has a thickness greater than or equal to 2 mm and less than or equal to 5 mm.

Optionally, the number of the waist-shaped holes is at least two.

Optionally, the first connecting portion is provided with a welding area configured to be welded and fixed to the output electrode;
wherein a limiting groove is formed on the first connecting portion to surround a periphery of the welding area.

In a second aspect, an embodiment of the present application provides a battery pack, including:
a housing;
a battery module, arranged in the housing, the battery module including a plurality of battery cells;
the above connection bar, wherein a surface of the first connecting portion close to the bending portion along the first direction faces the battery cell and is electrically connected to the battery cell; and,
at least one fastener, passing through the at least one waist-shaped hole from a surface of the second connecting portion close to the bending portion along the first direction to fix the second connecting portion in the housing.

Optionally, the battery pack further includes an output terminal arranged on the housing and configured to be electrically connected to an external device;
wherein the at least one fastener extends through the output terminal and the at least one waist-shaped hole, so that the output terminal and the second connecting portion are electrically connected and fixed to each other.

Optionally, the battery module includes an end plate, and the battery pack further includes a mounting base, wherein the at least one fastener is connected and fixed to the mounting base so that the second connecting portion is mounted on the mounting base, and the mounting base is detachably connected to the end plate.

Optionally, the mounting base and the end plate are detachably connected by means of snap connection.

Optionally, the mounting base and the end plate are detachably connected by means of screw connection.

In a third aspect, an embodiment of the present application provides an electrical device, including the above battery pack.

In the embodiments of the present application, the second connecting portion is lower than the first connecting portion when the first direction is considered as the vertical direction, so the height of the fastener passing through the second connecting portion can also be lower, thereby avoiding the fastener from protruding upward too high. On this basis, since the fastener is passed through the second connecting portion through the waist-shaped hole, after the battery cell expands due to heat and pulls the connection bar, the fastener can adaptively move relative to and in the waist-shaped hole, thereby improving the technical problem that the connection bar is easily damaged by being pulled or squeezed after the battery cell expands due to heat.

### BRIEF DESCRIPTION OF THE DRAWINGS

FIG. 1 is a schematic diagram showing a usage scenario of a connection bar according to some embodiments of the present application.
FIG. 2 is an exploded view of the connection bar and fasteners shown in FIG. 1.
FIG. 3 is a schematic structural diagram of the connection bar shown in FIG. 2 according to some embodiments of the present application.
FIG. 4 is a schematic structural diagram of the connection bar shown in FIG. 2 according to some embodiments of the present application.
FIG. 5 is a schematic diagram of some parts of a battery pack according to some embodiments of the present application.

### Description of reference numerals:

100, connection bar; 11, first connecting portion; 111, welding area; 112, limiting groove; 113, first surface; 114, second surface; 12, bending portion; 13, second connecting portion; 131, waist-shaped hole; 132, third surface; 133, lower space;
200, battery module; 21, battery cell; 211, output electrode; 22, end plate;
300, fastener;
400, output terminal;
500, mounting base;
H1, first direction; H2, second direction.

### DETAILED DESCRIPTION OF THE EMBODIMENTS

In the related art, the battery pack includes a battery module, an output terminal, a connection bar and at least one screw. The battery module is configured to store electric energy. One end of the connection bar is electrically connected to the output electrode of the battery module, and the other end is connected to the output terminal through a screw installed from top to bottom, so that the output terminal is configured to output electric energy to an external device.

In order to avoid the screw from protruding upward too high, the connection bar is structured to have one end that matches the screw recessed downward, so that the overall height after the screw is installed can be lower. However, during the operation of the battery pack, the battery module is easily expanded by heat and pulls the connection bar, resulting in damage to the recessed portion of the connection bar. For example, the connection bar is weaker at the part where the screw passes through, and is more easily damaged by the influence of the screw.

The applicant's research found that in some solutions, the strength of the connection bar can be improved by using a stronger material to prepare the connection bar or by thickening the thickness of the connection bar, thereby reducing the probability of damage to the connection bar. However, the former will lead to an increase in the cost of the connection bar, and the latter will not only lead to an increase in the cost of the connection bar, but also cause the energy density of the battery pack to decrease because the increased thickness of the connection bar occupies too much space inside the battery pack.

In addition, the applicant has also found that in some solutions, some raised arch structures (i.e., arc-shaped raised portions) can be provided on the connection bar. When the battery cell heats up and expands and pulls the connection bar, the adaptive deformation of the arch structure allows the connection bar to be prevented from being pulled and damaged; however, the manufacturing difficulty and manufacturing cost of the arch structure are relatively high.

Based on this, an embodiment of the present application provides a connection bar for battery pack, a battery pack and an electric device. The sunken portion of the connection bar cooperates with the fastener through a waist-shaped hole, so when the battery cell expands due to heat and pulls or squeezes the connection bar, the fastener can move in the waist-shaped hole to improve the technical problem that the connection bar is easily damaged by being pulled or squeezed. A more detailed example will be given below.

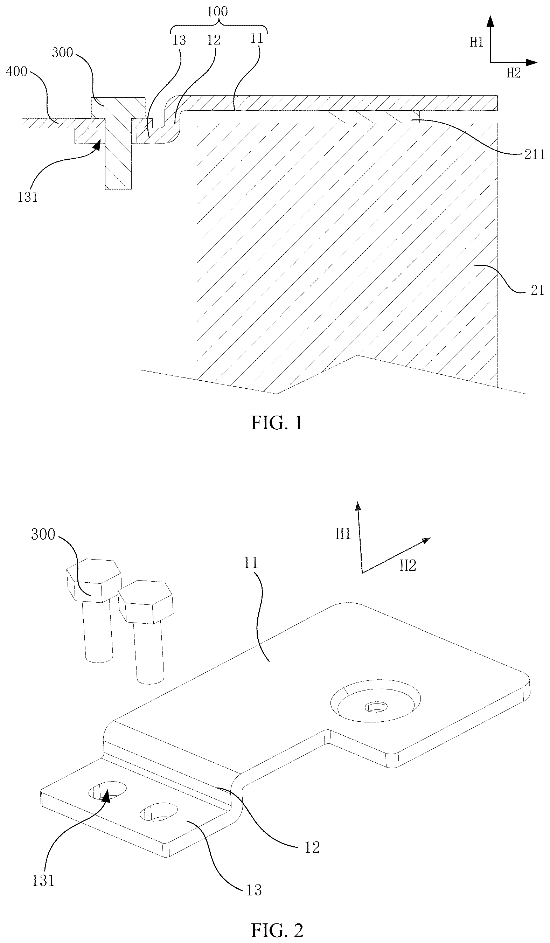

Please refer to FIG. 1 and FIG. 2. In a first aspect, an embodiment of the present application provides a connection bar 100 for a battery pack. The connection bar 100 includes a first connecting portion 11, a bending portion 12, and a second connecting portion 13.

The first connecting portion 11 is configured to be electrically connected to the output electrode 211 of the battery cell 21 (such as an electrode of the battery cell 21). One end of the bending portion 12 along the first direction H1 is connected to the first connecting portion 11, and the first direction H1 is the thickness direction of the first connecting portion 11. The second connecting portion 13 is bent and connected to the other end of the bending portion 12 along the first direction H1, so that the second connecting portion 13 and the first connecting portion 11 are offset in the first direction H1. At least one waist-shaped hole 131 is formed on the second connecting portion 13, and the waist-shaped hole 131 is configured to allow an external fastener 300 to pass through to install and fix the second connecting portion 13.

In an example, the first direction H1 is a vertical direction, it can be understood that the second connecting portion 13 is lower than the first connecting portion 11, so the height of the fastener 300 passing through the second connecting portion 13 can also be lower, thereby avoiding the fastener 300 from protruding upward too high. On this basis, since the fastener 300 is passed through the second connecting portion 13 through the waist-shaped hole 131, after the battery cell 21 expands due to heat and pulls the connection bar 100, the fastener 300 can adaptively move relative to and in the waist-shaped hole 131, thereby improving the technical problem that the connection bar 100 is easily damaged by being pulled or squeezed after the battery cell 21 expands due to heat.

In some embodiments, one end of the second connecting portion 13 along the second direction H2 is connected to the bending portion 12, the second direction H2 intersects with the first direction H1, and the waist-shaped hole 131 extends along the second direction H2.

It is understandable that the fastener 300 usually fastens the second connecting portion 13 in the housing of the battery pack. After the battery cell 21 heats up and expands, the output electrode 211 of the battery cell 21 will move in the direction close to or away from the fastener 300, so that the connection bar 100 is easily pulled or squeezed and damaged. The waist-shaped hole 131 is extended along the second direction H2. When the output electrode 211 of the battery cell 21 pulls the connection bar 100, the fastener 300 in the waist-shaped hole 131 can be adaptively moved to the end away from the bending portion 12 along the second direction H2. When the output electrode 211 of the battery cell 21 squeezes the connection bar 100, the fastener 300 in the waist-shaped hole 131 can be adaptively moved to the end close to the bending portion 12 along the second direction H2, thereby improving the technical problem that the connection bar 100 is easily pulled or squeezed and damaged after the battery cell 21 is heated and expanded.

In some embodiments, the first connecting portion 11 and the second connecting portion 13 are located on different sides of the bending portion 12 along the second direction H2, and the second direction H2 intersects with the first direction H1.

Taking the first direction H1 as the vertical direction as an example, the second direction H2 may be the left-right (horizontal) direction. It can be simply understood that the first connecting portion 11 is extended to the right from the upper end of the bending portion 12, and the second connecting portion 13 is extended to the left from the lower end of the bending portion 12, so that the second connecting portion 13 sinks relative to the first connecting portion 11. Therefore, after the fastener 300 passes through the second connecting portion 13 from top to bottom so that the upper end of the fastener 300 abuts against the second connecting portion 13, the height of the upper end of the fastener 300 will be lowered accordingly with the second connecting portion 13 to avoid the upper end of the fastener 300 protruding too much from the connection bar 100, so that there is no need to reserve a large space in the upper part of the battery pack to accommodate the upper end of the fastener 300, thereby improving the energy density of the battery pack.

It can also be understood that the first direction H1 may be a vertical direction and the second direction H2 may be a front-back (horizontal) direction, or the first direction H1 may be a left-right (horizontal) direction and the second direction H2 may be a vertical direction. Depending on the installation posture of the battery pack, the first direction H1 and the second direction H2 can be changed, and the embodiments of the present application do not limit this.

Correspondingly, the waist-shaped hole 131 is extended along the second direction H2.

In some other implementations, the waist-shaped hole 131 may also be extended along other directions, which is not limited in the embodiment of the present application.

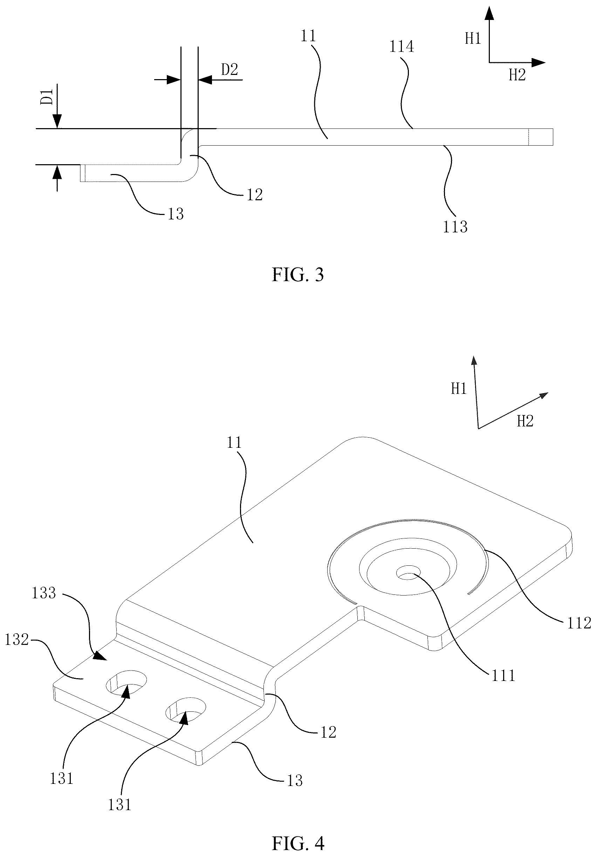

Please continue to refer to FIG. 3 and FIG. 4. In some embodiments, the first connecting portion 11 includes a second surface 114, which is a surface of the first connecting portion 11 along the first direction H1 away from the battery cell 21. The second connecting portion 13 includes a third surface 132, an orientation of the third surface 132 being the same as that of the second surface 114, and a distance D1 between the third surface 132 and the second surface 114 in the first direction H1 is greater than or equal to 7 mm.

Furthermore, the second connecting portion 13 is sunken a sufficiently large distance relative to the first connecting portion 11 so that the height of the top end surface of the fastener 300 is lower than or equal to the height of the upper surface (i.e., the second surface 114) of the first connecting portion 11, or the height of the top end of the fastener 300 protruding from the upper surface (i.e., the second surface 114) of the first connecting portion 11 is smaller.

In some embodiments, the first connecting portion 11 includes a second surface 114, which is a surface of the first connecting portion 11 away from the battery cell 21 along the first direction H1. The second connecting portion 13 includes a third surface 132, an orientation of the third surface 132 being the same as that of the second surface 114, and a distance D1 between the third surface 132 and the second surface 114 in the first direction H1 is less than or equal to 10 mm, thereby preventing the height of the bending portion 12 from being too large and causing insufficient strength of the entire connection bar 100.

Exemplarily, the distance D1 between the third surface 132 and the second surface 114 in the first direction H1 is 7 mm, 7.2 mm, 7.5 mm, 7.73 mm, 7.9 mm, 8 mm, 8.56 mm, 8.82 mm, 9 mm, 9 mm, 9.2 mm, 9.4 mm, 9.5 mm, 9.77 mm, 9.95 mm or 10 mm, which is not limited to this embodiment of the present application.

In some embodiments, along the second direction H2, the thickness D2 of the bending portion 12 is greater than or equal to 2 mm, so that the bending portion 12 has sufficient strength to prevent the bending portion 12 from being easily broken.

In some embodiments, along the second direction H2, the thickness D2 of the bending portion 12 is less than or equal to 5 mm, thereby avoiding the bending portion 12 being too thick, which would result in excessively high costs for the connection bar 100, and avoiding the bending portion 12 occupying too much space in the battery pack, which would result in reduced energy density of the battery pack.

Exemplarily, the thickness D2 of the bending portion 12 is 2 mm, 2.4 mm, 2.75 mm, 2.9 mm, 3 mm, 3.14 mm, 3.5 mm, 3.83 mm, 4 mm, 4.13 mm, 4.5 mm, 4.82 mm or 5 mm, which is not limited to the embodiments of the present application.

In some embodiments, the first connecting portion 11 has a first surface 113 and a second surface 114 arranged opposite to each other along the first direction H1, the first surface 113 is a surface of the first connecting portion 11 arranged to face the battery cell 21, and the bending portion 12 is connected to the side of the of the first connecting portion 11 where the first surface 113 is located.

The second connecting portion 13 includes a third surface 132, an orientation of the third surface 132 being the same as that of the second surface 114. The third surface 132 and the bending portion 12 form a lower space 133, which is located on the periphery of the first connecting portion 11 and is configured to allow the fastener 300 to pass through the waist-shaped hole 131 from the lower space 133.

The battery cell 21 can be installed in the battery pack with the output electrode 211 facing upward. The first connecting portion 11 is in contact with the upper side of the output electrode 211, and the bending portion 12 bends downward and extends. In this way, the upper end of the fastener 300 can be accommodated in the lower space 133, so that the upper end of the fastener 300 and the upper end of the output electrode 211 are roughly flush, thereby making the structure inside the battery pack more compact, so as to improve the energy density of the battery pack.

The number of the waist-shaped holes 131 may be one, or may be at least two, such as three, four, five or even six, which is not limited in the embodiment of the present application.

It can be understood that when the number of waist-shaped holes 131 is at least two, the number of corresponding fasteners 300 is also at least two, thereby improving the stability and reliability of the connection of the second connecting portion 13.

In some embodiments, at least two waist-shaped holes 131 are arranged along the second direction H2.

The above is some introduction to the second connecting portion 13 in the embodiment of the present application.

In some embodiments, the first connecting portion 11 has a welding area 111, and the welding area 111 is configured to be welded and fixed to the output electrode 211.

The welding area 111 may include a welding hole, a welding groove, etc., which is not limited in the embodiment of the present application.

In some embodiments, a limiting groove 112 is formed on the first connecting portion 11, and the limiting groove 112 surrounds the outer circumference of the welding area 111.

It is understandable that the battery pack generally further includes a signal acquisition terminal, which is installed at the first connecting portion 11 of the connection bar 100, so as to be configured to detect relevant parameters of the battery cell 21 and determine whether there is an abnormality in the working state of the battery cell 21. When the operator installs the signal acquisition terminal, the operator can observe the limit groove 112 and install the signal acquisition terminal on the periphery of the limit groove 112, thereby avoiding the signal acquisition terminal and the welding area 111 being too close to each other and interfering with each other.

The above is an introduction to the connection bar 100 according to the embodiments of the present application.

In a second aspect, the present application also provides a battery pack, which includes the above-mentioned connection bar 100. Therefore, the battery pack can improve the technical problem that the connection bar 100 is easily damaged by being pulled or squeezed after the battery cell 21 is heated and expanded.

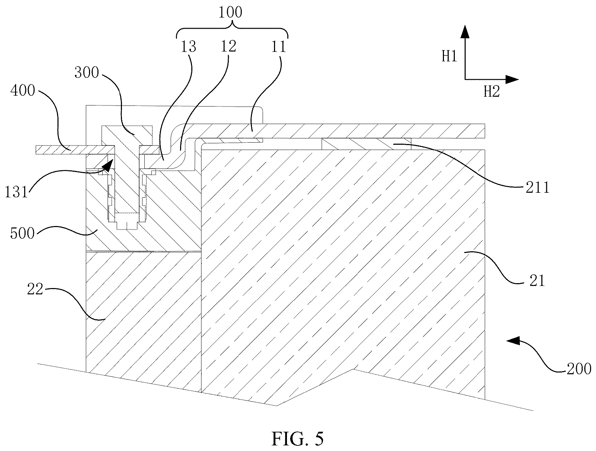

Please continue to refer to FIG. 5. For example, the battery pack may further include a housing 600, a battery module 200 and at least one fastener 300. The battery module 200 is disposed in the housing, and the battery module 200 includes a plurality of battery cells 21. The surface of the first connecting portion 11 close to the bending portion 12 along the first direction H1 faces the battery cell 21 and is electrically connected to the battery cell 21. The fastener 300 passes through the waist-shaped hole 131 from the surface of the second connecting portion 13 close to the bending portion along the first direction H1 to fix the second connecting portion 13 in the housing.

Then, continuing with the example where the battery cells 21 are each installed in the battery pack with its output electrode 211 facing upward, the first connecting portion 11 is in contact with the upper side of the output electrode 211 and the bending portion 12 bends downward and extends. In this way, the upper end of the fastener 300 is roughly flush with the upper end of the output electrode 211, thereby making the structure inside the battery pack more compact, thereby improving the energy density of the battery pack.

In some embodiments, the battery pack further includes an output terminal 400, which is disposed on the housing and is configured to be electrically connected to an external device. The fastener 300 is passed through the output terminal 400 and the waist-shaped hole 131, so that the output terminal 400 is connected and fixed to the second connecting portion 13 and forms an electrical connection therebetween.

Therefore, the connection bar 100 can also be considered as the connection bar for an output electrode of the battery pack.

In some embodiments, the battery module 200 includes an end plate 22, and the battery pack also includes a mounting base 500. The fastener 300 is connected and fixed to the mounting base 500 so that the second connecting portion 13 is installed on the mounting base 500, and the mounting base 500 is detachably connected to the end plate 22.

Therefore, different types of mounting bases 500 can be selected to cooperate with the end plate 22 according to the shape changes of the battery module 200, so as to achieve the installation and fixation of the connection bar 100, or different types of mounting bases 500 can be selected to cooperate with the battery module 200 according to the shape changes of the connection bar 100.

In some embodiments, the mounting base 500 and the end plate 22 are detachably connected by means of snap connection, screw connection, magnetic connection, etc., which is not limited in the embodiments of the present application.

In a third aspect, an embodiment of the present application further provides an electrical device, which includes the above-mentioned battery pack.

Since the battery pack has the above-mentioned connection bar 100, the electrical device of the embodiments of the present application can improve the technical problem that the connection bar 100 is easily damaged by being pulled or squeezed after the battery cell 21 expands due to heat.

The electrical device may be, but is not limited to, transportation, smart wearable devices, mobile terminals, household appliances and medical devices, which are not limited in the embodiments of the present application. Transportation includes, but is not limited to, cars, buses, trains, ships, flight equipment, etc. Smart wearable devices include, but are not limited to, smart watches, smart bracelets, cervical massagers, etc. Mobile terminals include, but are not limited to, smart phones, laptops, tablet computers, POS (point of sales terminal). Household appliances include, but are not limited to, televisions, washing machines, air conditioners, rice cookers, smart sweepers, smart lights, etc. Medical devices include, but are not limited to, infrared electronic thermometers, pulse oximeters, human body composition analyzers, etc.

## Claims

1. A connection bar (100) for a battery pack, **characterized by** comprising:
a first connecting portion (11) configured to be electrically connected to an output electrode (211) of a battery cell (21);
a bending portion (12), having two ends along a first direction (H1), one of the two ends is connected to the first connecting portion (11), the first direction being a thickness direction of the first connecting portion; and
a second connecting portion (13), bent and connected to another one of the two ends of the bending portion (12), wherein the second connecting portion (13) and the first connecting portion (11) are offset in the first direction (H1), the second connecting portion (13) provided with at least one waist-shaped hole (131) each configured to allow a fastener (300) to pass through so as to install and fix the second connecting portion (13).

2. The connection bar (100) according to claim 1, **characterized in that** an end of the second connecting portion (13) along a second direction (H2) is connected to the bending portion (12), the second direction (H2) intersects with the first direction (H1), and the at least one waist-shaped hole (131) each extends along the second direction (H2).

3. The connection bar (100) according to claim 2, **characterized in that** the first connecting portion (11) and the second connecting portion (13) are located on different sides of the bending portion (12) along the second direction (H2).

4. The connection bar (100) according to claim 1, **characterized in that** the first connecting portion (11) comprises a first surface (13) and a second surface (14) arranged opposite to each other along the first direction (H1), the first surface (113) facing the battery cell (21), and the bending portion (12) is connected to the first surface (113);
wherein the second connecting portion (13) comprises a third surface (132), an orientation of the third surface (132) being the same as that of the second surface (114), the third surface (132) and the bending portion (12) form a lower space (133) at a periphery of the first connecting portion (11), and the lower space (133) is configured to allow the fastener (300) to pass through the waist-shaped hole (131) from the lower space (133).

5. The connection bar (100) according to claim 1, **characterized in that** the first connecting portion (11) and the second connecting portion (13) are located on different sides of the bending portion (12) along a second direction (H2) intersecting with the first direction (H1);
wherein the first connecting portion (11) comprises a second surface (114) that is away from the battery cell (21) along the first direction (H1), and the second connecting portion (13) comprises a third surface (132), an orientation of the third surface (132) being the same as that of the second surface (114), and a distance between the third surface (132) and the second surface (114) in the first direction (H1) is greater than or equal to 7 mm and less than or equal to 10 mm.

6. The connection bar (100) according to claim 5, **characterized in that** in the second direction (H2), the bending portion (12) has a thickness greater than or equal to 2 mm and less than or equal to 5 mm.

7. The connection bar (100) according to claim 1, **characterized in that** in the second direction (H2), the bending portion (12) has a thickness greater than or equal to 2 mm and less than or equal to 5 mm.

8. The connection bar (100) according to any one of claims 1-7, **characterized in that** the number of the waist-shaped holes (131) is at least two.

9. The connection bar (100) according to any one of claims 1-7, **characterized in that** the first connecting portion (11) is provided with a welding area (111) configured to be welded and fixed to the output electrode (211);
wherein a limiting groove (112) is formed on the first connecting portion (11) to surround a periphery of the welding area (111).

10. A battery pack, **characterized by** comprising:
a housing;
a battery module (200), arranged in the housing, the battery module comprising a plurality of battery cells (21);
the connection bar (100) according to any one of claims 1-9, wherein a surface of the first connecting portion (11) close to the bending portion (12) along the first direction (H1) faces the battery cell (21) and is electrically connected to the battery cell (21); and,
at least one fastener (300), passing through the at least one waist-shaped hole (131) from a surface of the second connecting portion (13) close to the bending portion (12) along the first direction (H1) to fix the second connecting portion (13) in the housing.

11. The battery pack according to claim 10, **characterized in that** the battery pack further comprises an output terminal (400) arranged on the housing and configured to be electrically connected to an external device;
wherein the at least one fastener (300) extends through the output terminal (400) and the at least one waist-shaped hole (131), so that the output terminal (400) and the second connecting portion (13) are electrically connected and fixed to each other.

12. The battery pack according to claim 10, **characterized in that** the battery module (200) comprises an end plate (22), and the battery pack further comprises a mounting base (500), wherein the at least one fastener (300) is connected and fixed to the mounting base (500) so that the second connecting portion (13) is mounted on the mounting base (500), and the mounting base (500) is detachably connected to the end plate (22).

13. The battery pack according to claim 12, **characterized in that** the mounting base (500) and the end plate (22) are detachably connected by means of snap connection.

14. The battery pack according to claim 12, **characterized in that** the mounting base (500) and the end plate (22) are detachably connected by means of screw connection.

15. An electrical device, **characterized by** comprising the battery pack according to any one of claims 10-14
